# EUROPEAN PATENT APPLICATION

(11) **EP 4 703 122 A1**
(43) Date of publication of application: **04.03.2026**
(21) Application number: 25195446.7
(22) Date of filing: 12.08.2025
(51) Int. Cl.: B29C 45/66, B29C 45/76, B29C 45/80

(54) **INJECTION MOLDING MACHINE AND ADJUSTMENT METHOD**

(30) Priority: 27.08.2024 JP 2024145221
(71) Applicant: The Japan Steel Works, Ltd., Tokyo 141-0032 (JP)
(72) Inventor: MATSUURA, Kyouhei, Tokyo, 141-0032 (JP)
(74) Representative: Simmons & Simmons LLP (Munich)

(57) **Abstract**

A controller (100) calculates an amount of increase or decrease of a mold thickness that is a thickness of a mold, based on: a mold clamping completion position (K) that is a reference position of a crosshead (12) set to be associated with a preset mold clamping force being set in advance; and a position (C) of the crosshead (12) when the mold clamping force is applied in a mold clamping step during injection molding, and the controller corrects, using a first mechanism (20), a position of a mold clamping housing (7) based on the amount of increase or decrease of the mold thickness.

## Description

### CROSS REFERENCE TO RELATED APPLICATIONS

This nonprovisional application is based on Japanese Patent Application No. 2024-145221 filed on August 27, 2024 with the Japan Patent Office, the entire contents of which are hereby incorporated by reference.

### BACKGROUND OF THE INVENTION

### Field of the Invention

The present disclosure relates to an injection molding machine and an adjustment method for adjusting a mold clamping force.

### Description of the Background Art

Japanese Patent No. 5491487 discloses an adjustment method for adjusting the distance between a movable platen and a stationary platen to adjust the mold clamping force to a preset mold clamping force.

### SUMMARY OF THE INVENTION

A mold used for injection molding may be deformed due to an influence of the temperature when, for example, a process of flowing a high-temperature resin into the mold has been repeated. When the mold thickness, which is the thickness of the mold, has been changed by the influence of the temperature, the mold clamping force cannot be adjusted to a preset mold clamping force unless the distance between the movable platen and the stationary platen is changed to account for the change. Adjusting the distance between the movable platen and the stationary platen through trial and error may be a time-consuming process.

An object of the present disclosure is to adjust the mold clamping force in an injection molding machine to a set mold clamping force in a short time.

An injection molding machine according to a first aspect of the present disclosure relates to an injection molding machine that adjusts a mold clamping force for clamping a mold, the mold including a first mold member attached to a movable platen and a second mold member attached to a stationary platen. The injection molding machine includes: a mold clamping housing connected to the stationary platen; a first mechanism that adjusts a distance between the mold clamping housing and the stationary platen; a second mechanism that applies the mold clamping force to the mold; and a controller. The second mechanism is a toggle mechanism including: a threaded shaft that is driven to rotate; and a crosshead that moves with rotation of the threaded shaft. The controller is configured to calculate an amount of increase or decrease of a mold thickness, based on: a mold clamping completion position that is a reference position of the crosshead set to be associated with a preset mold clamping force being set in advance; and a position of the crosshead when the mold clamping force is applied in a mold clamping step during injection molding, and correct, using the first mechanism, a position of the mold clamping housing based on the amount of increase or decrease of the mold thickness.

An adjustment method according to a second aspect of the present disclosure relates to an adjustment method for adjusting, by a controller, a mold clamping force for clamping a mold in an injection molding machine, the mold including a first mold member attached to a movable platen and a second mold member attached to a stationary platen. The injection molding machine includes: a mold clamping housing connected to the stationary platen; a first mechanism that adjusts a distance between the mold clamping housing and the stationary platen; and a second mechanism that applies the mold clamping force to the mold. The second mechanism is a toggle mechanism including: a threaded shaft that is driven to rotate; and a crosshead that moves with rotation of the threaded shaft. The adjustment method includes: calculating an amount of increase or decrease of a mold thickness, based on: a mold clamping completion position that is a reference position of the crosshead set to be associated with a preset mold clamping force being set in advance; and a position of the crosshead when the mold clamping force is applied in a mold clamping step during injection molding; and correcting, using the first mechanism, a position of the mold clamping housing based on the amount of increase or decrease of the mold thickness.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram for illustrating a configuration of an injection molding machine.
Fig. 2 is a flowchart showing details of control.
Fig. 3 is a diagram showing a relationship for determining the amount of decrease of the mold thickness.
Fig. 4 is a flowchart showing details of control in a mold thickness decrease step.
Fig. 5 is a diagram showing a relationship for determining the amount of increase of the mold thickness.
Fig. 6 is a diagram for illustrating a case where the mold thickness has not changed and a case where the mold thickness has increased.
Fig. 7 is a flowchart showing details of control in a mold thickness increase step.

### DESCRIPTION OF THE PREFERRED EMBODIMENTS

Embodiments of the present disclosure are hereinafter described in detail with reference to the drawings. In the drawings, the same or corresponding parts are denoted by the same reference characters, and a description thereof is not herein repeated.

### (Configuration of Injection Molding Machine)

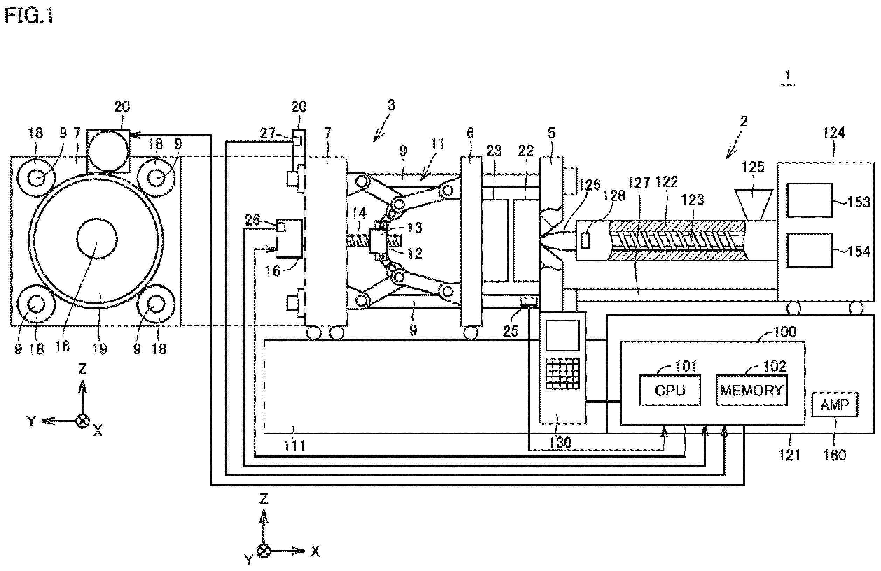

Fig. 1 is a diagram for illustrating a configuration of an injection molding machine 1. For convenience of description, a floor surface on which injection molding machine 1 is placed is defined as XY plane, and the direction perpendicular to the floor surface is defined as Z-axis direction. The positive direction of the Z axis may be referred to as upper surface side or upper side, and the negative direction thereof may be referred to as lower surface side or lower side. In Fig. 1, the drawing in the YZ plane is a front view of injection molding machine 1. Although injection molding machine 1 is shown as a horizontal injection molding machine, injection molding machine 1 is not limited to the horizontal injection molding machine but may be a vertical injection molding machine.

Referring to Fig. 1, injection molding machine 1 includes a mold clamping device 3 for clamping a mold, an injection device 2 for melting and injecting a material, an operation panel 130, a servo amplifier 160, and a controller 100. In Fig. 1, mold clamping device 3 is located on the negative direction side of the X axis with respect to injection device 2.

Mold clamping device 3 includes a bed 111, a stationary platen 5, a mold clamping housing 7, a movable platen 6, tie bars 9, a mold clamping mechanism 11, a servo motor 16, a geared motor 20, and gears 18 and 19. Bed 111 is disposed on the floor surface, and devices such as stationary platen 5, mold clamping housing 7, and movable platen 6 are mounted on the upper surface of the bed. Mold clamping mechanism 11 includes a crosshead 12, a ball nut 13, and a ball screw 14.

On bed 111, stationary platen 5 is fixed to the end relatively closer to injection device 2 (that is, the end on the positive direction side of the X axis). On bed 111, mold clamping housing 7 is disposed at the end on the negative direction side of the X axis. Stationary platen 5 and mold clamping housing 7 are connected to each other by tie bars 9 including a plurality of bars. Mold clamping housing 7 is movable on bed 111 in the X-axis direction.

On bed 111, movable platen 6 is disposed between stationary platen 5 and mold clamping housing 7. Movable platen 6 is configured to be movable in the X-axis direction. Mold clamping housing 7 and movable platen 6 are connected to each other by mold clamping mechanism 11. Mold clamping mechanism 11 has a toggle mechanism. Mold clamping mechanism 11 is provided with crosshead 12 for driving mold clamping mechanism 11. Ball nut 13 is fixed to crosshead 12. Ball screw 14 is screwed into ball nut 13. In mold clamping mechanism 11, two links (arms) are driven by movement of crosshead 12, and a large output can be obtained from a small input.

Mold clamping mechanism 11 can cause movable platen 6 to make relative movement in the X-axis direction with respect to mold clamping housing 7, by driving servo motor 16 disposed at mold clamping housing 7 to rotate ball screw 14. A hydraulically-driven linear cylinder may be used as mold clamping mechanism 11.

Gear 18 is fixed by a tie bar nut (not shown). Gear 18 is engaged with gear 19. In mold clamping device 3, when geared motor 20 is driven, the tie bar nut rotates synchronously via gears 18 and 19. Mold clamping device 3 moves mold clamping housing 7 by rotation of the tie bar nut. Mold clamping device 3 adjusts the distance between movable platen 6 and stationary platen 5 by means of the movement of mold clamping housing 7.

A mold member 23 is mounted on movable platen 6. A mold member 22 is mounted on stationary platen 5. Mold member 23 and mold member 22 are arranged to face each other between movable platen 6 and stationary platen 5. An integral mold made up of the first and second mold members is formed by moving the movable platen to which mold member 23 is attached, toward stationary platen 5 to which mold member 22 is attached.

Mold clamping mechanism 11 can be used to move mold member 23 in the X-axis direction to bring mold member 23 and mold member 22 into close contact with each other, or to separate mold member 23 from mold member 22. The dimension of the mold when mold member 23 and mold member 22 contact each other and thereby form the integral mold is referred to as mold thickness. The position where mold member 23 and mold member 22 contact each other is referred to as mold touch position. In the following description, a step of causing mold member 23 and mold member 22 to make a transition from the separated state to the close contact state is referred to as "mold closing." A step of clamping the mold in the closed state with a large force so that the mold will not be opened by the pressure applied for injection is referred to as "mold clamping." Moreover, a step of causing mold member 23 and mold member 22 to make a transition from the close contact state to the separated state is referred to as "mold opening."

In the state where mold member 23 and mold member 22 are clamped by the mold clamping step, a molten material (resin) is introduced into the mold, and cooled to be solidified, and accordingly a product can be molded in a desired shape. After molding the product, mold member 23 is separated from mold member 22 by the mold opening step and, in this state, the product (also referred to as molded product) can be ejected to be removed out of mold member 23 by operating an ejector device (not shown) disposed on movable platen 6.

Injection device 2 includes a base 121, a heating cylinder 122, a driving device 124, a hopper 125, an injection moving device 127, and a temperature sensor 128. Base 121 is disposed on a floor surface of bed 111 that is located on the positive direction side of the X axis, and driving device 124 is mounted on the upper surface of the base. Servo motors 153 and 154 are disposed in driving device 124.

Heating cylinder 122 extending in the X-axis direction is disposed at driving device 124. Heating cylinder 122 includes a heater (not shown) for heating the inside, a screw 123, and an injection nozzle 126. Screw 123 is driven by servo motor 153 in driving device 124 and is configured to be rotatable about the X-axis direction as a rotation axis. Screw 123 is also configured to be movable in the X-axis direction by servo motor 154. Injection nozzle 126 is disposed at the end of heating cylinder 122 on mold clamping device 3 side (that is, the end located on the negative direction side of the X axis). Heating cylinder 122 generates a molten material by heating to melt a bead-shaped resin material introduced from hopper 125 and kneading the resin material with screw 123. Thus, a step of melting the resin material is referred to as "plasticizing" step.

Injection moving device 127 is formed of, for example, a mechanism using a hydraulic cylinder or a mechanism using a ball screw, and connects driving device 124 and stationary platen 5 of mold clamping device 3 to each other. In the case where injection moving device 127 is formed of the mechanism using a ball screw, injection moving device 127 is driven by driving device 124 to move driving device 124 and heating cylinder 122 in the X-axis direction. Injection moving device 127 brings injection nozzle 126 into contact with a sprue bush of mold member 22 in mold clamping device 3, and the molten material is injected from injection nozzle 126, so that the inside of a cavity of mold members 22 and 23 (mold) is filled with the molten material. Servo motor 154 applies pressure to the molten material by moving screw 123 in heating cylinder 122 in the negative direction of the X axis, to thereby cause the molten material to be injected into the mold, and keeps constant the pressure of the molten material after being injected.

A step of injecting the molten material into mold members 22 and 23 is referred to as "injection" step. After the injection step, a step of keeping the molten material filling the inside of mold members 22 and 23 at a constant pressure to adjust the shrinkage amount is referred to as "pressure keeping" step. After the pressure keeping step is completed, a cooling step of making the molten material on standby for being solidified in the mold, and a plasticizing step of melting, kneading, and weighing the material for the next injection are performed in parallel.

Temperature sensors 128 are disposed at several locations from the base side of heating cylinder 122 toward injection nozzle 126 (only one temperature sensor is shown). Temperature sensor 128 detects the temperature of heating cylinder 122 and outputs the detected temperature to controller 100. Controller 100 controls the heater based on the detection value of temperature sensor 128 to adjust heating cylinder 122 to a desired temperature.

In response to completion of the cooling step and the plasticizing step, the mold opening step and an ejection step are performed to remove the molded product. Injection molding machine 1 can successively form products by cyclically repeating the mold closing step, the mold clamping step, the injection step, the pressure keeping step, the cooling-and-plasticizing step, the mold opening step, and the ejection step.

Controller 100 and servo amplifier 160 for driving servo motors 16 and 153 to 154 are stored inside a control panel provided at base 121. Controller 100 includes a CPU (Central Processing Unit) 101 and a memory 102. Controller 100 acquires values detected by various sensors disposed in injection molding machine 1, and performs centralized control of injection molding machine 1.

Mold clamping device 3 is provided with a sensor 25 for detecting the mold clamping force. Sensor 25 is, for example, a strain sensor, and is disposed on tie bar 9. Sensor 25 detects elastic deformation of tie bar 9. Controller 100 calculates the mold clamping force based on a signal from sensor 25. Controller 100 drives servo motor 16 for adjusting the mold clamping force.

Servo motor 16 is provided with a position sensor 26 (for example, an optical encoder) that detects the rotation angle of servo motor 16. Geared motor 20 is provided with a position sensor 27 (for example, an optical encoder) that detects the rotation angle of geared motor 20. Respective detection signals of position sensors 26 and 27 are output to controller 100. Controller 100 can detect the position of crosshead 12 based on the detection signal of position sensor 26. Controller 100 can detect the position of mold clamping housing 7 based on the detection signal of position sensor 27. Controller 100 adjusts the distance between mold clamping housing 7 and stationary platen 5 by driving geared motor 20.

Mold clamping mechanism 11 is a toggle mechanism including ball screw 14 that is driven to rotate by servo motor 16, and crosshead 12 that moves with the rotation of ball screw 14. The toggle mechanism is a link mechanism in which two links (arms) are driven by movement of crosshead 12, so that a large output can be obtained from a small input.

Injection molding machine 1 moves, toward stationary platen 5, the position of mold clamping housing 7 to a predetermined position, by driving geared motor 20 of mold clamping device 3. In the state where mold clamping housing 7 is fixed at the predetermined position, injection molding machine 1 moves crosshead 12 to a preset mold clamping completion position K, by driving servomotor 16 of mold clamping mechanism 11. Thus, in injection molding machine 1, movable platen 6 is moved toward stationary platen 5 and accordingly movable platen 6 and stationary platen 5 touch each other and, in this state, a load is further applied to clamp the mold. That is, "geared motor 20" in the present embodiment corresponds to "first mechanism" in the present disclosure. Further, "mold clamping mechanism 11" in the present embodiment corresponds to "second mechanism" in the present disclosure.

In injection molding machine 1, the mold thickness may change due to a temperature change of the mold, for example, during injection molding. When the mold thickness changes, it is necessary to adjust the distance between movable platen 6 and stationary platen 5 depending on the change of the mold thickness, in order to make the mold clamping force equal to a mold clamping force set in advance (also referred to as preset mold clamping force). In such a case, in injection molding machine 1, the position of mold clamping housing 7 may be corrected depending on the change of the mold thickness, so that the preset mold clamping force is applied to the mold when crosshead 12 has moved to the mold clamping completion position K.

For example, when the mold thickness has decreased from the thickness of the initial state, even when crosshead 12 has moved to the mold clamping completion position K, a desired preset mold clamping force cannot be ensured, resulting in a possibility that the molten material leaks from the mold and/or a burr is generated. Therefore, it is necessary to reduce the distance between movable platen 6 and stationary platen 5 by changing the position of mold clamping housing 7, in order to ensure the preset mold clamping force. In contrast, in the case of increase of the mold thickness due to thermal expansion, for example, the mold clamping force is too large when crosshead 12 has moved to the mold clamping completion position K. Therefore, for the sake of machine protection, it is necessary to prevent an excessive force from being applied to the mold, by changing the position of mold clamping housing 7 depending on the amount of increase of the mold thickness, to thereby increase the distance between movable platen 6 and stationary platen 5.

Since such adjustment of the distance between movable platen 6 and stationary platen 5 is conventionally performed through trial and error where an operator stops the machine every time the adjustment is to be made, this is a time-consuming process and may cause reduction of the capacity utilization rate. In view of this, in injection molding machine 1 of the present disclosure, the position of mold clamping housing 7 is automatically corrected based on the amount of increase or decrease of the mold thickness. Accordingly, even when the mold thickness is changed, injection molding machine 1 can automatically and quickly correct the position of mold clamping housing 7 depending on the change of the mold thickness. Therefore, injection molding machine 1 can ensure a desired mold clamping force and shorten the time for the process, to thereby improve the capacity utilization rate.

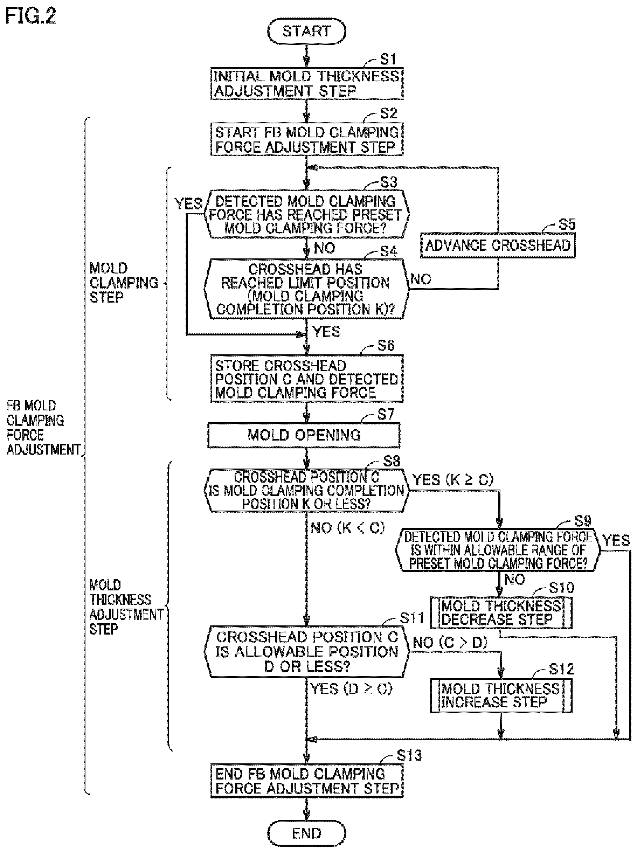

In the following, details of control of injection molding machine 1 are described. Fig. 2 is a flowchart showing details of control performed by controller 100. In Fig. 2, in step S (hereinafter referred to simply as "S") 1, when mold members 22 and 23 are attached to injection molding machine 1, the initial position of mold clamping housing 7 and the initial value of the position of crosshead 12 at the time when mold clamping is completed are determined, based on the shapes of mold members 22 and 23.

The process of S2 to S13 is a process of making adjustments while feeding back the mold clamping force. In this process, a mold clamping step shown in S3 to S6 is a step of storing the position of crosshead 12 (also referred to as crosshead position C) depending on a change of the mold thickness and the mold clamping force as detected (detected mold clamping force) when injection molding machine 1 is driven based on the initial position of mold clamping housing 7 and the initial value of the position of crosshead 12 at the time when mold clamping is completed, by feedback control of the mold clamping force. A mold thickness adjustment step shown in S8 to S12 is a step of correcting the position of mold clamping housing 7 based on the mold thickness changed in the mold clamping step during injection molding, by feedback control of the mold clamping force.

Controller 100 performs a mold thickness decrease step of S10 when the mold thickness has decreased, and performs a mold thickness increase step of S12 when the mold thickness has increased. In the following description, the position at which crosshead 12 has been advanced to the maximum extent in the mold clamping direction (the mold closing direction, the positive direction of the X axis), that is, the position at which the link of the toggle mechanism has been extended to the maximum extent, is defined as zero. It is described herein that, as crosshead 12 moves in the mold opening direction (the negative direction of the X axis), the amount of movement increases. The mold clamping completion position K is set to a position on the negative direction side of the X axis (for example, a position with a margin of about 0.3 mm) with respect to the position where the link of the toggle mechanism has been extended to the maximum extent, in consideration of an error or the like.

Initially, in step S1, controller 100 performs an initial mold thickness adjustment step. In the initial mold thickness adjustment step, controller 100 sets the initial position of mold clamping housing 7 based on an input value of the mold thickness that is input by an operator, and stores the initial position in memory 102. The initial position of mold clamping housing 7 is determined in advance by a table or the like based on the type of the mold, and is stored in memory 102.

Next, controller 100 starts a mold clamping force adjustment step of adjusting, through feedback, the mold clamping force applied to the mold, and advances crosshead 12 to move movable platen 6 in the mold closing direction (S2). The subsequent process of S2 to S13 is repeatedly performed during operation of injection molding machine 1. In the mold clamping step in the molding process of each cycle, controller 100 determines whether or not the detected mold clamping force has reached a preset mold clamping force while crosshead 12 is moving forward (S3). When controller 100 determines that the detected mold clamping force has not reached the preset mold clamping force (NO in S3), the process proceeds to S4. In S4, controller 100 determines whether or not crosshead 12 has reached the mold clamping completion position K, which is the position of the limit of movement (S4).

When determining in S4 that crosshead 12 has not reached the mold clamping completion position K which is the position of the limit of movement (NO in S4), controller 100 continues causing crosshead 12 to advance (S5), and the process returns to S3. If NO in S3 and NO in S4, controller 100 causes crosshead 12 to advance, since the mold members do not touch each other or crosshead 12 has not reached the position of the limit.

When controller 100 determines in S3 that the detected mold clamping force has reached the preset mold clamping force (YES in S3), the process proceeds to S6. **In** the case of YES in S3, it is indicated that the mold thickness has not changed and the preset mold clamping force has been reached at the mold clamping completion position K, or the preset mold clamping force has been reached before the mold clamping completion position K is reached, due to an increase of the mold thickness. **In** such a case, controller 100 stops crosshead 12 for the sake of machine protection, and the process proceeds to S6.

When controller 100 determines that crosshead 12 has reached the mold clamping completion position K set as the position of the limit of movement (YES in S4), the process proceeds to S6. In the case of YES in S4, it is indicated that crosshead 12 has reached the mold clamping completion position K (crosshead 12 is located at the position to which the crosshead has extended to the maximum extent) before the detected mold clamping force reaches the preset mold clamping force due to a decrease of the mold thickness. In such a case, controller 100 stops crosshead 12 and the process proceeds to S6, because crosshead 12 cannot be moved any more due to the decrease of the mold thickness.

Controller 100 causes crosshead 12 to advance in the mold clamping step by repeating the process of S3 to S5 until the determination YES is made in S3 or the determination YES is made in S4. When the mold clamping operation is completed, controller 100 stores, in memory 102 in S6, the crosshead position C, which is the position of crosshead 12 when the determination YES is made in S3 or the determination YES is made in S4 (when crosshead 12 stops), and the detected mold clamping force at the crosshead position C. Thus, controller 100 can store the crosshead position C corresponding to the mold thickness and the detected mold clamping force detected at the crosshead position C.

Subsequently, controller 100 drives servo motor 16 to open the mold by a predetermined amount (S7), and causes the ejector device to operate to eject and remove the molded product from mold member 23 (also referred to as shot). Controller 100 performs the subsequent mold thickness adjustment step using the crosshead position C and the detected mold clamping force stored in S6, between the shot performed this time and the shot performed next time.

In the mold thickness adjustment step, controller 100 determines whether or not the crosshead position C stored in S6 is equal to or less than the mold clamping completion position K (S8). By the process in S8, controller 100 compares the mold clamping completion position K set in advance with the crosshead position C.

When controller 100 determines in S8 that the crosshead position C is equal to or less than the mold clamping completion position K (YES in S8), the process proceeds to S9. In the case of YES in S8, i.e., in the case where the crosshead position C is equal to or less than the mold clamping completion position K, it is indicated that the mold thickness has not changed and the desired preset mold clamping force is reached at the mold clamping completion position K (i.e., a normal state), or that the mold thickness has been decreased and the desired preset mold clamping force is not reached even when crosshead 12 has moved beyond the mold clamping completion position K in the positive direction of the X-axis (the direction toward the maximum extension to approach 0) with respect to.

In S9, controller 100 determines whether or not the detected mold clamping force stored in S6 falls within an allowable range of the preset mold clamping force (S9). The allowable range of the preset mold clamping force refers to a range of the mold clamping force that does not affect the injection molding. The range that does not affect the injection molding in S9 refers to a range that exerts no influence even if the mold clamping force is slightly insufficient, since crosshead 12 is moved toward the maximum extent beyond the mold clamping completion position K. When controller 100 determines that the detected mold clamping force falls within the allowable range of the preset mold clamping force (YES in S9), the process proceeds to S13 without performing the mold thickness adjustment, since the mold thickness has not changed or the amount of decrease of the mold thickness is such an amount that does not affect the injection molding.

In S9, when determining that the detected mold clamping force is out of the allowable range of the preset mold clamping force, that is, the mold thickness has been decreased to the extent that affects the injection molding (NO in S9), controller 100 performs the mold thickness decrease step of S10, in order to correct the setting of the mold thickness. The case where the determination is NO in S9 is a case where the mold clamping force is significantly insufficient with respect to the preset mold clamping force, in spite of the fact that crosshead 12 is located at the position of the maximum extent, due to the decrease of the mold thickness. The case where the determination is NO in S9 thus means that the detected mold clamping force deviates from the allowable range of the preset mold clamping force due to the fact that the mold thickness has decreased from the initial value, and that the crosshead position C has moved beyond the mold clamping completion position K.

By the process of S10, controller 100 calculates the amount of decrease of the mold thickness and corrects the position of mold clamping housing 7 using the calculated amount of decrease. By correcting the position of mold clamping housing 7, mold clamping can be started, in the next cycle, from the position of mold clamping housing 7 adapted to the decreased mold thickness. When crosshead 12 is moved to the mold clamping completion position K in the mold clamping step, by the correction in S10, a desired preset mold clamping force is applied to the mold. Details of the process in S10 are described later herein.

When controller 100 determines in S8 that the crosshead position C is larger than the mold clamping completion position K (NO in S8), the process proceeds to S11. In the case of NO in S8, the preset mold clamping force is reached before crosshead 12 reaches the mold clamping completion position K, due to increase of the mold thickness, and therefore, crosshead 12 is located on the negative direction side of the X axis with respect to the mold clamping completion position K.

Subsequently, controller 100 determines whether or not the crosshead position C is equal to or less than an allowable position D (S11). The allowable position D herein refers to an allowable range of the amount of increase of the mold thickness. The allowable position D is a range of the amount of increase of the mold thickness that does not affect the injection molding, and is set to a position on the negative direction side of the X axis with respect to the mold clamping completion position K. That is, no problem occurs as long as the crosshead position C falls within a range from the mold clamping completion position K to the allowable position D. In contrast, when the crosshead position C is located on the negative direction side of the X axis beyond the allowable position D, this means that the mold thickness has increased to the extent that affects the injection molding.

The allowable position D is set to fall within a range that does not affect injection molding machine 1, in consideration of the load of geared motor 20. Specifically, when the crosshead position C is larger than the allowable position D, the preset mold clamping force is reached in the state where the arms of the toggle mechanism are bent to a large extent. When the arms are stretched, the reaction force of the mold clamping force is received by both geared motor 20 and the arms; however, when the arms are bent to a large extent, the mold clamping force cannot be received by the arms, and therefore, only geared motor 20 receives the reaction force of the mold clamping force. Therefore, when the crosshead position C is larger than the allowable position D, a high load is applied to geared motor 20, which may cause a failure. Therefore, determining that the crosshead position C is larger than the allowable position D (NO in S11), controller 100 performs the mold thickness increase step of S12, in order to correct the setting of the mold thickness.

Controller 100 calculates the amount of increase of the mold thickness by the process in S12. Then, controller 100 corrects the position of mold clamping housing 7, using the amount of increase. By correcting the position of mold clamping housing 7, mold clamping can be started, in the next cycle, from the position of mold clamping housing 7 adapted to the increased mold thickness. Accordingly, in the mold clamping step, when crosshead 12 is moved to the mold clamping completion position K, a desired preset mold clamping force is applied to the mold. Details of the process in S12 are described later herein.

When determining in S11 that the crosshead position C is equal to or less than the allowable position D (YES in S11), controller 100 determines that the amount of increase of the mold thickness is an amount of increase that does not affect the injection molding, and ends the feedback mold clamping force adjustment step (S13). In other words, in the case of YES in S11, it is determined that the increase in the load on geared motor 20 is small, since the bending of the arms of the toggle mechanism is small, although the mold thickness has increased.

In the mold thickness decrease step in S10 and the mold thickness increase step in S12, the position of mold clamping housing 7 can be corrected in a single process using different relationships respectively as described in the following. Therefore, injection molding machine 1 can automatically and quickly correct the position of mold clamping housing 7 depending on the changed mold thickness. Accordingly, injection molding machine 1 can adjust the mold clamping force to the preset mold clamping force in a short time.

Initially, the mold thickness decrease step in S10 is described. Since the mold clamping step is performed within a region of elastic deformation of tie bars 9, there is a proportional relationship between the position of movable platen 6 and the mold clamping force that the mold clamping force applied to the mold increases as movable platen 6 moves in the mold clamping direction from the mold touch position.

When the mold thickness has been decreased, the actual mold clamping force detected as the detected mold clamping force does not reach the preset mold clamping force even when the mold clamping step is started from the initial position of mold clamping housing 7 and movable platen 6 is moved to the mold clamping completion position K. This is because the mold touch position is shifted in the mold closing direction with respect to the initial position, due to the presence of a gap corresponding to the decrease of the mold thickness.

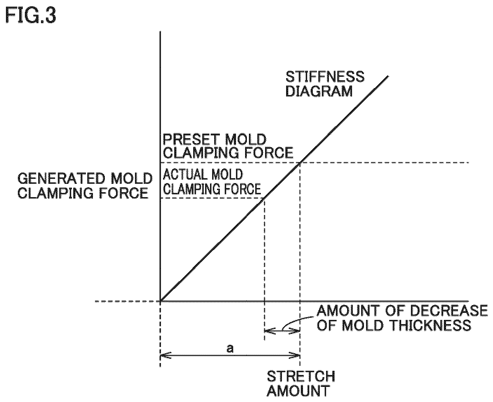

The relationship used in the mold thickness decrease step when the mold thickness has decreased is described. Fig. 3 is a diagram showing a relationship for determining the amount of decrease of the mold thickness. The horizontal axis in Fig. 3 represents the stretch amount of tie bars 9 (the amount by which the tie bars are stretched) as movable platen 6 is moved. The stretch amount of tie bars 9 refers to the amount by which the mold is clamped to be contracted, as crosshead 12 is moved to cause tie bars 9 to extend in the negative direction of the X axis. The amount by which the mold is clamped to be contracted is the same as the amount by which movable platen 6 moves in the positive direction of the X axis. **In** other words, the stretch amount of tie bars 9 is equal to a change in the distance between mold clamping housing 7 and movable platen 6. The vertical axis in Fig. 3 represents the generated clamping force.

In the case where the mold thickness has not decreased, the mold clamping force is generated as crosshead 12 moves from the mold touch position and, when crosshead 12 has moved by an amount of movement "a" from the mold touch position, crosshead 12 reaches the mold clamping completion position K and the preset mold clamping force is reached. However, when the mold thickness has decreased, the mold touch position is shifted in the mold closing direction from the initial position, and therefore, the mold clamping force is not generated from the time when the mold touch position is at the initial position to the time when the mold members actually touch each other, that is, in the gap corresponding to the decrease in mold thickness. Therefore, even when crosshead 12 is moved to the mold clamping completion position K, the actual mold clamping force does not reach the preset mold clamping force. In other words, the amount of movement of crosshead 12 from the mold touch position, from the time when the mold members actually touch each other to the time when the mold clamping completion position K is reached, is smaller than the amount of movement "a" as defined above.

Therefore, as shown in Fig. 3, the amount of decrease of the mold thickness can be determined by subtracting the amount of movement of movable platen 6 corresponding to the detected mold clamping force actually detected at the mold clamping completion position K, from the amount of movement "a" of movable platen 6 when the preset mold clamping force is reached at the mold clamping completion position K in the case where there is no decrease of the mold thickness. Thus, the amount of decrease of the mold thickness can be determined easily from the relationship of the stiffness diagram shown in Fig. 3. By correcting, in the mold closing direction, mold clamping housing 7 by the determined amount of decrease of the mold thickness, to thereby eliminate the gap corresponding to the decrease of the mold thickness, the preset mold clamping force can be reached when crosshead 12 has been moved to the mold clamping completion position K.

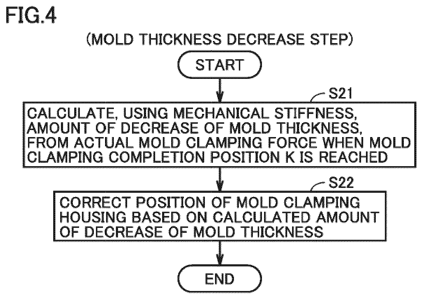

Fig. 4 is a flowchart showing details of control in the mold thickness decrease step. The process of Fig. 4 is performed as a subroutine of the process in S10 of Fig. 2. When the mold thickness has decreased, controller 100 calculates the amount of decrease of the mold thickness, from the actual mold clamping force when the mold clamping completion position K is reached, by using the mechanical stiffness (S21). Specifically, in the process in S21, the amount of movement of movable platen 6 from the corresponding mold touch position is determined from the actual mold clamping force, which is the detected mold clamping force stored in S6 of Fig. 2, and the amount of decrease of the mold thickness is calculated by subtracting the determined amount of movement from the amount of movement "a" of movable platen 6 corresponding to the preset mold clamping force. Subsequently, controller 100 corrects the position of mold clamping housing 7 to the positive direction side of the X axis, based on the calculated amount of decrease of the mold thickness (S22), and ends the process.

By performing the process from S21 to S22, controller 100 can calculate the amount of decrease of the mold thickness and correct the position of mold clamping housing 7 to the positive direction side of the X axis, based on the calculated amount of decrease of the mold thickness. Accordingly, even when the mold thickness is decreased during the injection molding, injection molding machine 1 can automatically set, in a single process, an appropriate position of mold clamping housing 7 adapted to the decreased mold thickness, and can therefore adjust the mold clamping force to a desired preset mold clamping force in a short time.

In contrast, when the mold thickness has increased, the mold members touch each other before reaching the initial position of the mold touch so that the mold clamping force reaches the preset mold clamping force before the preset mold clamping completion position K is reached. If crosshead 12 is moved to the mold clamping completion position K in such a state, it is possible to calculate the amount of increase of the mold thickness, using Fig. 3, from the increased mold clamping force detected at the mold clamping completion position K. However, since there is a possibility that an excessive load is applied to the mold to damage the mold, crosshead 12 is stopped when the mold clamping force reaches the preset mold clamping force in the mold clamping step, for the sake of machine protection. Thus, when the mold thickness has increased, the amount of movement of movable platen 6 from the time when the mold members touch each other to the time when the preset mold clamping force is reached is equal to the amount of movement "a" and thus the amount of increase of the mold thickness cannot be calculated using the relationship in Fig. 3.

However, the actual position of crosshead 12 when the preset mold clamping force is reached and the position of crosshead 12 corresponding to the mold touch position can be calculated by means of position sensor 26. Since there is a correlation between the position of crosshead 12 and the position of movable platen 6, the amount of increase of the mold thickness is determined, in the mold thickness increase step in S12, from the positional relationship between the position of crosshead 12 and movable platen 6.

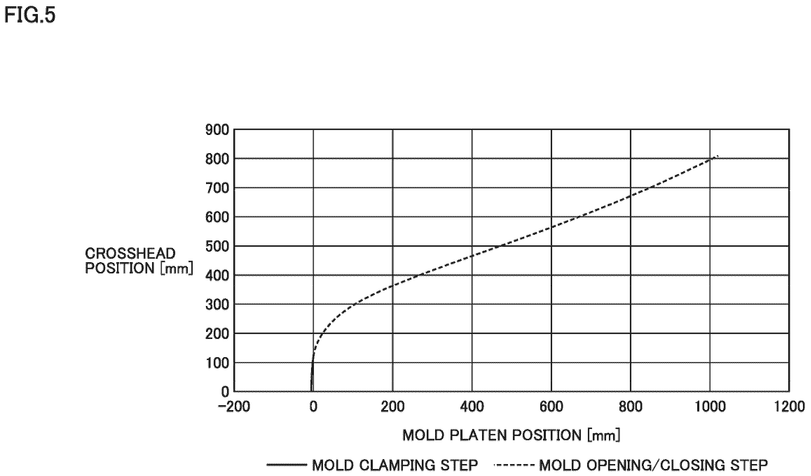

The relationship used in the mold thickness increase step when the mold thickness has increased is described. Fig. 5 is a diagram showing a relationship for determining the amount of increase of the mold thickness. The horizontal axis in Fig. 5 represents the mold platen position, which is the position of movable platen 6. The vertical axis in Fig. 5 represents the position of crosshead 12 (the amount of movement of crosshead 12). The table in Fig. 5 shows a positional relationship between movable platen 6 and crosshead 12 when only servo motor 16 is actuated in the case where there is no increase or decrease of the mold thickness. Specifically, the solid line in Fig. 5 indicates the relationship between the crosshead position and the mold platen position when the mold clamping step is performed from the mold touch position, and the broken line in Fig. 5 indicates the relationship between the crosshead position and the mold platen position in the mold opening/closing step up to the mold touch position. In the mold clamping step (solid line) in Fig. 5, the mold members are in the state of touching each other, and therefore, the position of the mold platen hardly changes even when the crosshead position moves by about 100 mm. In contrast, in the mold opening/closing step, the position of the mold platen greatly increases or decreases as the crosshead position increases or decreases.

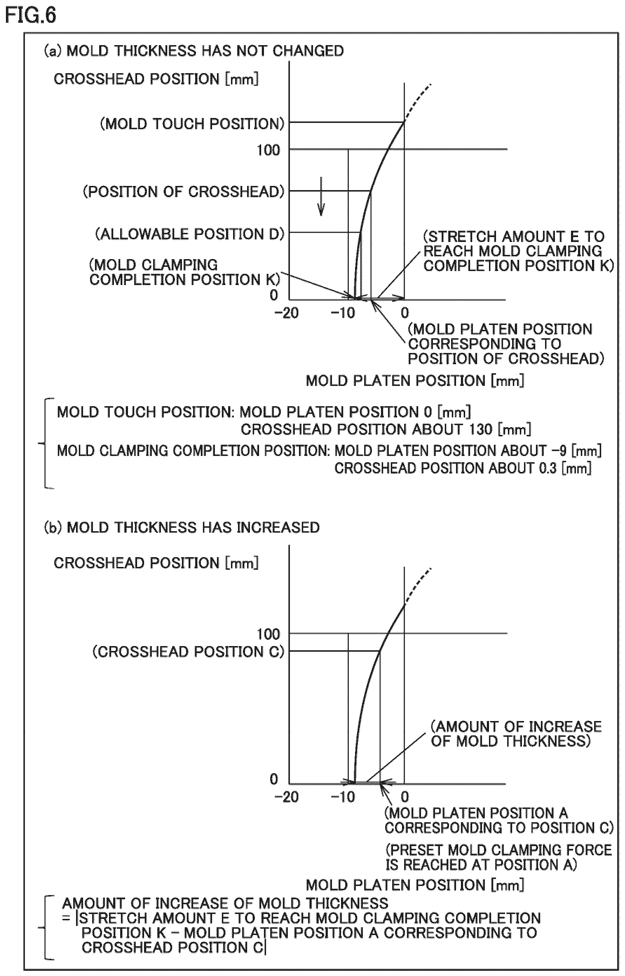

The amount of increase of the mold thickness is determined using Fig. 6 where the range defined by the solid line in the relationship in Fig. 5 is enlarged. Fig. 6 is a diagram for illustrating a case where the mold thickness has not changed and a case where the mold thickness has increased. In Fig. 6, (a) is a diagram for illustrating the case where the mold thickness has not changed, and (b) is a diagram for illustrating the case where the mold thickness has increased. As shown in (a) in Fig. 6, the mold platen position when the mold touch position is reached is set to 0 mm.

In the case where the mold thickness has not changed, the mold platen position is 0 mm and the crosshead position is about 130 mm, when the mold touch position is reached, as shown in (a) in Fig. 6. When mold clamping is performed from the mold touch position, crosshead 12 moves in the positive direction of the X axis (mold closing direction) from the mold touch position, and movable platen 6 moves in the positive direction of the X axis (mold closing direction). In the case where the mold thickness has not changed, crosshead 12 finally moves to the mold clamping completion position K. When the mold clamping completion position is reached, the mold platen position is about -9 mm, and the crosshead position is about 0.3 mm.

The stretch amount of tie bars 9 by which the tie bars are stretched when crosshead 12 moves from the mold touch position to the mold clamping completion position K, is denoted as E. The stretch amount E of tie bars 9 is the same as the amount by which movable platen 6 moves in the positive direction of the X axis. In the case where there is no change of the mold thickness, the range of the position of crosshead 12 from the allowable position D to the mold clamping completion position K shown in (a) of Fig. 6 indicates a range that does not affect the injection molding even when the mold thickness has increased.

In the case where the mold thickness has increased, crosshead 12 stops at the crosshead position C as shown in (b) of Fig. 6. This is because the preset mold clamping force is reached before crosshead 12 reaches the mold clamping completion position K due to the increase of the mold thickness, so that crosshead 12 stops before the mold clamping completion position K. Assuming that the mold platen position corresponding to the crosshead position C is denoted as A, the preset mold clamping force is reached when movable platen 6 is at the mold platen position A. In other words, due to the increase of the mold thickness, movable platen 6 cannot be moved in the mold closing direction to a greater extent than the extent to which the movable platen can be moved in the case where there is no change of the mold thickness.

Since the stretch amount E to reach the mold clamping completion position K in the case where there is no change of the mold thickness is known in advance, the amount by which movable platen 6 cannot move in the mold closing direction can be determined by subtracting the mold platen position A corresponding to the crosshead position C from the stretch amount E to reach the mold clamping completion position K. Since the amount by which movable platen 6 cannot move is equal to the amount of increase of the mold thickness, the amount of increase of the mold thickness can be determined by the following Formula (1).

Amount of increase of mold thickness = (stretch amount E to reach mold clamping completion position K) - (mold platen position A corresponding to crosshead position C) ... (1)

In Formula (1), the stretch amount E and the mold platen position A have negative values, and therefore, the absolute value of the difference is used. The amount by which movable platen 6 moves is taken into consideration to determine the amount of increase of the mold thickness, by subtracting the amount of movement of movable platen 6 corresponding to the crosshead position C when the preset mold clamping force is reached in the case where the mold thickness has increased, from the amount of movement of movable platen 6 calculated from the position of movable platen 6 corresponding to the mold touch position and the position of movable platen 6 corresponding to the mold clamping completion position K in the case where the mold thickness has not increased. Thus, the amount of increase of the mold thickness can be determined easily from the relationship shown in Fig. 5. Specifically, the amount of increase of the mold thickness can be determined from the relationship between the crosshead position and the mold platen position when the mold clamping is done, as shown in Fig. 6. A table indicating the relationship shown in Fig. 5 is stored in advance in memory 102.

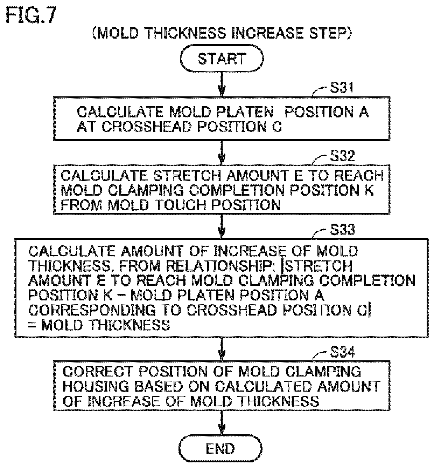

Fig. 7 is a flowchart showing details of control in the mold thickness increase step. The process of Fig. 7 is performed as a subroutine of the process in S12 of Fig. 2. When the mold thickness has increased, controller 100 calculates the mold platen position A at the current crosshead position C, from the relationship shown in Fig. 5 (S31). The process in S31 is a process of determining the position of movable platen 6 from the crosshead position C when the preset mold clamping force is reached. Subsequently, controller 100 calculates the stretch amount E to reach the mold clamping completion position K from the mold touch position, from the relationship shown in Fig. 5 (S32). The process of S32 is a process of determining the amount of movement of movable platen 6 by determining the stretch amount E to reach the mold clamping completion position K from the mold touch position in the case where there is no change of the mold thickness.

Subsequently, controller 100 calculates the amount of increase of the mold thickness, from the relationship: (amount of stretch E to reach the clamping completion position K) - (mold platen position A corresponding to crosshead position C) = amount of increase of the mold thickness (S33). Namely, controller 100 calculates the amount of increase of the mold thickness by determining the absolute value of the difference determined by subtracting the mold platen position A corresponding to the crosshead position C calculated in S31, from the stretch amount E to reach the mold clamping completion position K calculated in S32. The process of S33 is the same as the process of determining the amount of increase of the mold thickness by subtracting the amount of movement of movable platen 6 corresponding to the crosshead position C when the preset mold clamping force is reached in the case where the mold thickness has increased, from the amount of movement of movable platen 6 calculated from the position of movable platen 6 corresponding to the mold touch position and the position of movable platen 6 corresponding to the mold clamping completion position K in the case where the mold thickness has not increased. Subsequently, controller 100 corrects the position of mold clamping housing 7 based on the calculated amount of increase of the mold thickness (S34), and ends the process.

By performing the processes of S31 to S34, controller 100 can calculate the amount of increase of the mold thickness and correct the position of mold clamping housing 7, based on the calculated amount of increase of the mold thickness. Accordingly, even when the mold thickness increases during injection molding, injection molding machine 1 can automatically set, in one process, the appropriate position of mold clamping housing 7 adapted to the increase of the mold thickness, and can therefore adjust the mold clamping force to the preset mold clamping force in a short time.

As described above, controller 100 calculates, in one process, the amount of increase/decrease of the mold thickness, based on the mold clamping completion position K and the crosshead position C when the mold clamping force is applied in the mold clamping step during injection molding, and corrects the position of mold clamping housing 7 based on the amount of increase/decrease of the mold thickness. Accordingly, even when the mold thickness has changed, injection molding machine 1 can automatically set, in one process, mold clamping housing 7 at an appropriate position adapted to the change of the mold thickness, and can therefore adjust the mold clamping force to a preset mold clamping force in a short time. Accordingly, injection molding machine 1 can ensure a desired mold clamping force and shorten the process time to improve the capacity utilization rate.

Although the present invention has been described and illustrated in detail, it is clearly understood that the same is by way of illustration and example only and is not to be taken by way of limitation, the scope of the present invention being interpreted by the terms of the appended claims.

## Claims

1. An injection molding machine (1) that adjusts a mold clamping force for clamping a mold, the mold comprising a first mold member (23) attached to a movable platen (6) and a second mold member (22) attached to a stationary platen (5), the injection molding machine comprising:
a mold clamping housing (7) connected to the stationary platen (5);
a first mechanism (20) that adjusts a distance between the mold clamping housing (7) and the stationary platen (5);
a second mechanism (11) that applies the mold clamping force to the mold; and
a controller (100), wherein
the second mechanism (11) is a toggle mechanism including: a threaded shaft (14) that is driven to rotate; and a crosshead (12) that moves with rotation of the threaded shaft (14), and
the controller (100) is configured to
calculate an amount of increase or decrease of a mold thickness based on
a mold clamping completion position (K) that is a reference position of the crosshead (12) set to be associated with a preset mold clamping force being set in advance, and
a position (C) of the crosshead (12) when the mold clamping force is applied in a mold clamping step during injection molding, and
correct, using the first mechanism (20), a position of the mold clamping housing (7) based on the amount of increase or decrease of the mold thickness.

2. The injection molding machine according to claim 1, further comprising a storage device (102) that stores a relationship between the position (C) of the crosshead (12) and a position of the movable platen (6), wherein
in a case where the position (C) of the crosshead (12) when the preset mold clamping force is reached has not reached the mold clamping completion position (K), the controller (100) is configured to calculate the amount of increase of the mold thickness, from the relationship stored in the storage device (102).

3. The injection molding machine according to claim 1, further comprising a storage device (102), wherein
the storage device (102) stores
an upper limit value and a lower limit value of the preset mold clamping force, and
a relationship between the mold clamping force and an amount of movement of the movable platen (6) from a position corresponding to a mold touch position where the first mold member (23) and the second mold member (22) touch each other, and
in a case where the position (C) of the crosshead (12) reaches the mold clamping completion position (K) and a detected mold clamping force detected in the mold clamping step is out of a range defined by the upper limit value and the lower limit value, the controller (100) is configured to calculate the amount of decrease of the mold thickness, from the relationship stored in the storage device (102).

4. The injection molding machine according to claim 2, wherein the controller (100) is configured to calculate the amount of increase of the mold thickness by subtracting a second amount of movement from a first amount of movement,
the first amount of movement is an amount of movement of the movable platen (6) calculated from a position of the movable platen (6) corresponding to the mold clamping completion position and a position of the movable platen (6) corresponding to a mold touch position where the first mold member (23) and the second mold member (22) touch each other in a case where the mold thickness has not increased, and
the second amount of movement is an amount of movement of the moveable platen (6) corresponding to the position (C) of the crosshead (12) when the preset mold clamping force is reached in a case where the mold thickness has increased.

5. The injection molding machine according to claim 3, wherein
the controller (100) is configured to calculate the amount of decrease of the mold thickness, by subtracting an amount of movement of the movable platen (6) corresponding to the detected mold clamping force, from an amount of movement of the movable platen (6) when the preset mold clamping force is reached.

6. An adjustment method for adjusting, by a controller (100), a mold clamping force for clamping a mold in an injection molding machine (1), the mold comprising a first mold member (23) attached to a movable platen (6) and a second mold member (22) attached to a stationary platen (5), wherein
the injection molding machine (1) comprises:
a mold clamping housing (7) connected to the stationary platen (5);
a first mechanism (20) that adjusts a distance between the mold clamping housing (7) and the stationary platen (5); and
a second mechanism (11) that applies the mold clamping force to the mold,
the second mechanism (11) is a toggle mechanism including: a threaded shaft (14) that is driven to rotate; and a crosshead (12) that moves with rotation of the threaded shaft (14), and
the adjustment method comprises:
calculating an amount of increase or decrease of a mold thickness, based on
a mold clamping completion position (K) that is a reference position of the crosshead (12) set to be associated with a preset mold clamping force being set in advance, and
a position (C) of the crosshead (12) when the mold clamping force is applied in a mold clamping step during injection molding; and
correcting, using the first mechanism (20), a position of the mold clamping housing (7) based on the amount of increase or decrease of the mold thickness.
